# EUROPEAN PATENT APPLICATION

(11) **EP 4 343 926 A1**
(43) Date of publication of application: **27.03.2024**
(21) Application number: 22804484.8
(22) Date of filing: 15.04.2022
(51) Int. Cl.: H01M 10/651, H01M 10/613, H01M 10/625, H01M 10/653, H01M 10/6556, H01M 10/6568

(54) **COOLING STRUCTURE, BATTERY UNIT, AND COOLING STRUCTURE MANUFACTURING METHOD**

(30) Priority: 20.05.2021 JP 2021085188
(71) Applicant: NIPPON STEEL CORPORATION, Chiyoda-ku Tokyo 100-8071 (JP)
(72) Inventor: MATSUI, Sho, Tokyo 100-8071 (JP); KODAMA, Shinji, Tokyo 100-8071 (JP); MIYAKE, Kyohei, Tokyo 100-8071 (JP); MIKAZUKI, Yutaka, Tokyo 100-8071 (JP); OKE, Takashi, Tokyo 100-8071 (JP); NORITA, Katsunari, Tokyo 100-8071 (JP)
(74) Representative: Zimmermann & Partner Patentanwälte mbB
(86) International application number: PCT/JP2022/017942
(87) International publication number: WO 2022/244570

(57) **Abstract**

A cooling structure according to an aspect of the present invention includes a press forming member including a groove part and a bank part provided around the groove part, a flow path upper lid which is a flat sheet overlapped at a position covering the groove part of the press forming member and forms a flat cooling surface, and a laser weld which joins opposing surfaces of the flow path upper lid and the bank part to form a flow path through which a cooling liquid is capable of flowing, in which the press forming member and the flow path upper lid are plated steel sheets including a base steel sheet and an Al-based plating, the flow path has a parallel flow path portion in which a plurality of partial flow paths extending along a first direction are arranged in a second direction orthogonal to the first direction, and in the parallel flow path portion, an interval between adjacent partial flow paths is 20 mm or less.

## Description

### [Technical Field of the Invention]

The present invention relates to a cooling structure, a battery unit, and a manufacturing method of the cooling structure.

The present application claims priority based on Japanese Patent Application No. 2021-085188 filed in Japan on May 20, 2021, the contents of which are incorporated herein by reference.

### [Related Art]

In order to reduce the amount of carbon dioxide emissions, with respect to automobiles, electric vehicles (EV) are being developed. In a battery box of an EV, it is necessary to provide a cooling structure in order to prevent deterioration of a battery due to a temperature rise. Hitherto, air-cooling types have been the mainstream for a cooling structure, but in recent years, with the increase in capacities of batteries, water-cooling types having a high cooling capacity have increasingly been adopted (for example, Patent Documents 1, 2, and 3). In a water-cooling type battery pack, a water-cooling medium flow path through which cooling water flows is formed outside the battery pack.

### [Citation List]

### [Patent Document]

[Patent Document 1]
   Japanese Unexamined Patent Application, First Publication No. 2020-107443
[Patent Document 2]
   Japanese Patent No. 6125624
[Patent Document 3]
   Japanese Unexamined Patent Application, First Publication No. 2012-17954

### [Summary of Invention]

### [Problems to be Solved by the Invention]

The outer wall portion and the cooling structure of the water-cooling type battery pack are often made of aluminum having high corrosion resistance to a cooling liquid. However, aluminum has a problem in terms of cost. In addition, since aluminum is soft, it is difficult to reduce the weight of the outer wall by thinning the outer wall while securing the outer wall strength in a cooling structure formed of an aluminum plate. When the material of these members is a steel sheet, it is possible to provide a water-cooling type battery pack at low cost and reduce the weight thereof.

A long-life coolant (LLC) aqueous solution containing an organic component flows as a cooling liquid in the water-cooling medium flow path. Therefore, the member water-cooling medium flow path is required to have high corrosion resistance against a cooling liquid. In addition, since the battery pack and the cooling structure are disposed on the bottom surface of the automobile, the battery pack and the cooling structure are exposed to an external environment. Therefore, the members constituting the battery pack and the cooling structure are required to have a corrosion resistance equivalent to that of the suspension parts of the automobile. Hereinafter, corrosion resistance to a cooling liquid is referred to as cooling liquid corrosion resistance or inner surface corrosion resistance, and corrosion resistance to an external environment is referred to as outer surface corrosion resistance. In addition, when "corrosion resistance", is simply referred to, this refers to both cooling liquid corrosion resistance and outer surface corrosion resistance.

Plating is one of means for enhancing corrosion resistance of a steel sheet. For example, by forming plating such as Al-based plating on the surface of the steel sheet, both cooling liquid corrosion resistance and outer surface corrosion resistance can be enhanced.

On the other hand, as a matter of course, the cooling structure is required to have high cooling efficiency. In addition, liquid tightness of the flow path is also required to maintain cooling efficiency and suppress LLC leakage. However, as of yet, there have been almost no examples of a cooling structure in which a flow path is formed using a plated steel sheet, and therefore, a method for joining plated steel sheets has not been studied. Spot welding is usually used as means for firmly joining plated steel sheets. However, since spot welding is point joining, it is difficult to ensure liquid tightness of the flow path. Although it is possible to secure the liquid tightness of the spot weld using a sealer, the sealer may be deteriorated by the LLC. Therefore, in manufacturing the cooling structure, a joining method capable of securing liquid tightness of the flow path while maintaining corrosion resistance is also required.

In the technique of Patent Document 3, a cooler is manufactured by brazing an aluminum-plated steel sheet. However, the technique of Patent Document 3 is assumed to be applied only to a small device, and it is difficult to cope with coolers of various sizes. Further, in Patent Document 3, it is a problem to prevent deformation of the exterior member, and it is difficult to change joining means of the exterior member.

In view of the above circumstances, an object of the present invention is to provide a cooling structure having high cooling efficiency, excellent liquid tightness of a flow path, and further having high cooling liquid corrosion resistance and outer surface corrosion resistance, a battery unit, and a manufacturing method of the cooling structure.

### [Means for Solving the Problem]

The gist of the present invention is as follows.

(1) A cooling structure according to an aspect of the present invention includes a press forming member having a groove part and a bank part provided around the groove part, a flow path upper lid which is a flat sheet overlapped at a position covering the groove part of the press forming member and forms a flat cooling surface, and a laser weld which joins opposing surfaces of the flow path upper lid and the bank part to form a flow path through which a cooling liquid is capable of flowing, in which the press forming member and the flow path upper lid are plated steel sheets each including a base steel sheet and a Al-based plating, the flow path includes a parallel flow path portion in which a plurality of partial flow paths extending along a first direction are arranged in a second direction orthogonal to the first direction, and in a part or all of the parallel flow path portions, an interval between the adjacent partial flow paths is 20 mm or less.
(2) In the cooling structure described in (1) above, in the parallel flow path portion, an interval between the adjacent partial flow paths may be 0.8 to 15 mm.
(3) In the cooling structure described in (1) of (2) above, the width of the partial flow path may be 6 to 60 mm.
(4) In the cooling structure described in (1) or (2) above, the width of the partial flow path may be 6 to 20 mm.
(5) In the cooling structure described in any one of (1) to (4) above, the Al-based plating may include Si.
(6) In the cooling structure described in (5) above, the Si content of the Al-based plating may be 2.0 to 15 mass%.
(7). In the cooling structure described in any one of (1) to (6) above, the cooling structure may include a chemical conversion coating film including 50 mass% or more of a Zr-based component, a Ti-based component or a Si-based component.
(8) In the cooling structure described in any one of (1) to (7) above, a cross-sectional shape of the bank part may be substantially an arc, and the radius of curvature of the bank part at a contact section between the flow path upper lid and the bank part may be 15 mm or less.
(9) In the cooling structure described in any one of (1) to (8) above, a film thickness of the Al-based plating may be 10.0 µm or more, in a vicinity of the laser weld, an interval between the press forming member and the flow path upper lid may be 0.3 mm or less, and a wider one of a bead width of a surface of the laser weld in the flow path upper lid and a bead width of a surface of the laser weld in the press forming member may be 0.8 to 1.5 mm.
(10) In the cooling structure described in any one of (1) to (9) above, the plated steel sheet forming the press forming member and the flow path upper lid may have a sheet thickness of 0.3 to 1.2 mm.
(11) In the cooling structure described in any one of (1) to (10) above, the laser weld may include a flow path outer edge weld surrounding all the flow paths, and a starting end and a terminating end of the laser weld may be excluded from the flow path outer edge weld.
(12) In the cooling structure described in any one of (1) to (11) above, a start position and an end position of the laser weld may be omitted from the cooling structure.
(13) In the cooling structure described in any one of (1) to (12) above, a part or a whole of a surface of the laser weld between the press forming member and the flow path upper lid may be covered with the Al-based plating.
(14) In the cooling structure described in any one of (1) to (13) above, 30% or more of a surface of the laser weld between the press forming member and the flow path upper lid may be covered with the Al-based plating.
(15) In the cooling structure described in any one of (1) to (14) above, the bead height of the laser weld in the flow path upper lid may be 0.3 mm or less.
(16) A battery unit according to another aspect of the present invention includes a battery cell, a battery pack in which the battery cell is housed, and the cooling structure described in any one of (1) to (15) above, in which the flow path upper lid of the cooling structure is joined to the battery pack.
(17) A battery unit according to another aspect of the present invention includes a battery cell, a battery pack in which the battery cell is housed, and the cooling structure described in any one of (1) to (15) above, in which the flow path upper lid of the cooling structure is the battery pack.
(18) A manufacturing method of a cooling structure according to another aspect of the present invention includes press-forming a steel sheet to obtain a press forming member having a groove part and a bank part provided around the groove part, and overlapping a flow path upper lid which is a flat sheet at a position covering the groove part of the press forming member and laser welding the flow path upper lid and the bank part of the press forming member to obtain a laser weld which forms a flow path through which a cooling liquid is capable of flowing, in which the press forming member and the flow path upper lid are plated steel sheets each including a base steel sheet and an Al-based plating, the flow path includes a parallel flow path portion in which a plurality of partial flow paths extending along a first direction are arranged in a second direction orthogonal to the first direction, and in the parallel flow path portions, an interval between the adjacent partial flow paths is 20 mm or less.
(19) In the manufacturing method of a cooling structure described in (18) above, a film thickness of the Al-based plating is 10.0 µm or more, in the laser welding, a beam diameter may be 0.2 to 0.8 mm and a heat input per unit welding length may be 30 to 120 kJ/m, and an interval between the press forming member and the flow path upper lid in the vicinity of the laser weld may be 0.3 mm or less.

### [Effects of the Invention]

According to the present invention, it is possible to provide a cooling structure having high cooling efficiency, excellent liquid tightness of a flow path, and further having high cooling liquid corrosion resistance and outer surface corrosion resistance, a battery unit, and a manufacturing method of the cooling structure.

### [Brief Description of the Drawings]

FIG. 1 is a cross-sectional view perpendicular to an extending direction of a partial flow path of a cooling structure in which a cross-sectional shape of a press forming member is rectangular.
FIG. 2A is a plane view of the cooling structure in which a flow path connecting portion and a partial flow path are orthogonal to each other as viewed from a press forming member side.
FIG. 2B is a plane view of the cooling structure in which a flow path connecting portion has a branch structure as viewed from a press forming member side.
FIG. 3 is a cross-sectional view perpendicular to the extending direction of the partial flow path of the cooling structure in which the cross-sectional shape of the press forming member is corrugated.
FIG. 4 is an enlarged cross-sectional view of the cooling structure showing an interval D between partial flow paths.
FIG. 5A is a perspective view of a cooling structure in which a middle portion of a laser weld is disposed between a flow path and a start position and an end position of the laser weld.
FIG. 5B is a perspective view of the cooling structure in which the start position and the end position of the laser weld are omitted.
FIG. 6A is a schematic view of a cooling structure in which the start position and the end position of the laser weld are omitted from a flow path outer edge weld.
FIG. 6B is a schematic view of a cooling structure in which the start position and the end position of the laser weld are omitted from the flow path outer edge weld.
FIG. 7 is a schematic view of a method for measuring a cover ratio in a surface of the laser weld between the press forming member and the flow path upper lid.
FIG. 8A is a perspective view of a battery unit.
FIG. 8B is a cross-sectional view of a battery unit using a battery pack as a flow path upper lid.
FIG. 8C is a cross-sectional view of the battery unit in which the battery pack and the flow path upper lid are joined.
FIG. 9 is a perspective view of a cooling structure of Example 1.
FIG. 10A is a graph showing a relationship between a bead width and a cover ratio in a cooling structure of Example 2 manufactured from a steel sheet of which the film thickness of a plating is 10 µm.
FIG. 10B is a graph showing a relationship between a bead width and a cover ratio in a cooling structure of Example 2 manufactured from a steel sheet of which the film thickness of a plating is 60 µm.
FIG. 11A is a perspective view of a press forming member before laser welding of a cooling structure of Example 3.
FIG. 11B is a perspective view of the flow path upper lid before laser welding of the cooling structure of Example 3.
FIG. 11C is a perspective view of the cooling structure of Example 3.

### [Embodiments of the Invention]

Hereinafter, preferred embodiments of the present invention will be described in detail with reference to the accompanying drawings.

### (1. Cooling structure)

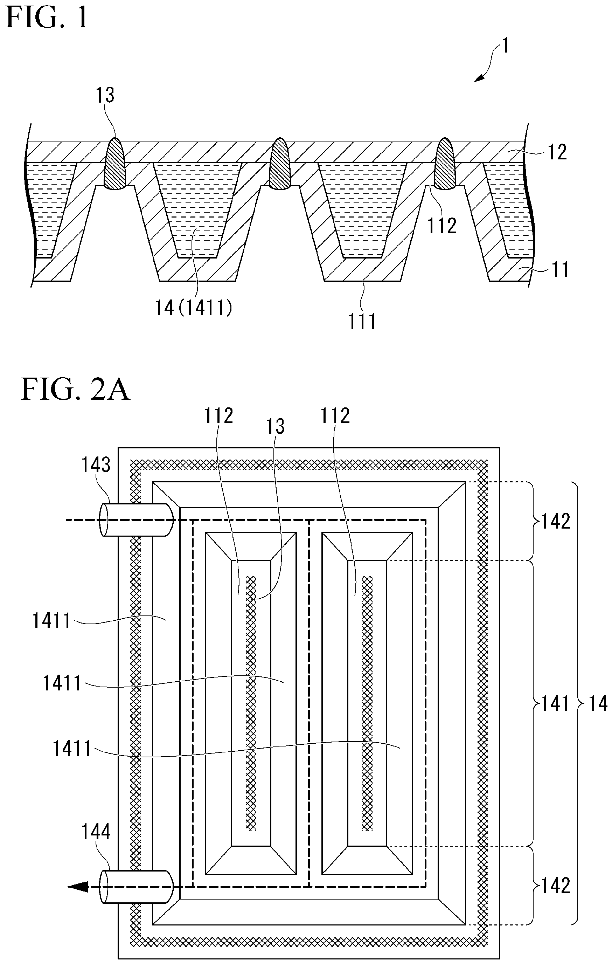

First, a cooling structure according to a first embodiment of the present invention will be described. As illustrated in FIGS. 1 and 2A, a cooling structure 1 according to the present embodiment includes a press forming member 11, a flow path upper lid 12, and a laser weld 13 that joins these components. The laser weld is a joint portion formed of a linear bead (that is, a weld metal). FIG. 1 is a cross-sectional view of the cooling structure 1, and FIG. 2A is a plane view of the cooling structure 1 from the press forming member 11 side.

### (1.1 Outline of cooling structure)

The press forming member 11 is a member obtained by press forming a plated steel sheet, and includes a groove part 111 and a bank part 112 provided around the groove part 111. In FIG. 1, the bottom of the press forming member 11 and the periphery thereof are groove parts 111, and the top portion of the press forming member 11 and the periphery thereof are bank parts 112. The flow path upper lid 12 is a member forming a flat cooling surface, has a flat sheet shape, and is overlapped at a position covering the groove part 111 of the press forming member 11.

### (1.2 Shape of press forming member)

The press forming member 11 and the flow path upper lid 12 are joined by a laser weld 13. Specifically, the laser weld 13 joins opposing surfaces of the flow path upper lid 12 and the bank part 112 of the press forming member 11. As a result, the flow path upper lid 12 and the groove part 111 form a flow path 14 through which the cooling liquid is capable of flowing. As indicated by a broken line in FIG. 2A, in the flow path 14, any cooling liquid such as LLC introduced from a cooling liquid inlet 143 can flow to a cooling liquid outlet 144. Accordingly, it is possible to cool the flow path upper lid 12 as a cooling surface and an arbitrary object in contact with the flow path upper lid 12. In the flow path illustrated in FIG. 2A, the plurality of partial flow paths 1411 extending along the first direction includes a parallel flow path portion 141 arranged in the second direction orthogonal to the first direction, and a flow path connecting portion 142 that communicates these partial flow paths 1411. The first direction is, for example, a longitudinal direction or a lateral direction of the cooling structure 1. A specific configuration of the flow path 14 will be described later.

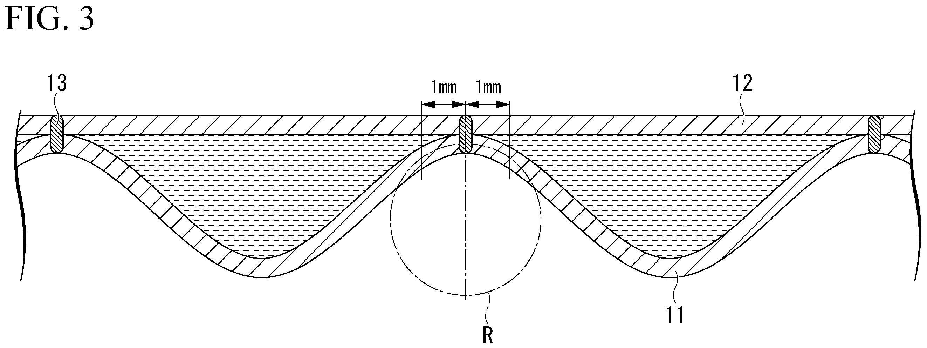

Shapes of the bank part 112 and the groove part 111 are not particularly limited. In the press forming member 11 illustrated in FIG. 1, the cross sections of the bank part 112 and the groove part 111 are substantially rectangular (trapezoidal). On the other hand, the cross-sectional shape of one or both of the bank part 112 and the groove part 111 of the press forming member 11 may be a partially circular shape or a substantially circular arc shape. As illustrated in FIG. 3, the press forming member 11 in which the cross-sectional shapes of both the bank part 112 and the groove part 111 are partially circular or substantially arc is referred to as a corrugated plate.

In a case where the cross-sectional shape of the bank part 112 is substantially an arc, the radius of curvature of the bank part 112 at the contact section between the flow path upper lid 12 and the bank part 112, that is, at the laser weld 13 may be 15 mm or less, 13 mm or less, or 10 mm or less. As the radius of curvature of the bank part 112 in the laser weld 13 is smaller, the width W of the partial flow path 1411 is widened, and the cooling efficiency of the cooling structure 1 is further enhanced.

The radius of curvature of the bank part 112 at the contact section between the flow path upper lid 12 and the bank part 112 is measured in a cross section of the partial flow path 1411 parallel to the second direction orthogonal to the first direction that is the extending direction of the partial flow path 1411 and perpendicular to the surface of the flow path upper lid 12. As illustrated in FIG. 3, in this cross section, the radius of a circle R including a total of three points including the center of the weld metal and two points 1 mm away from the center of the weld metal along the second direction at the center of the bank part 112 in the sheet thickness direction is the radius of curvature of the bank part 112 at the contact section between the flow path upper lid 12 and the bank part 112.

### (1.3 Configuration of plated steel sheet)

The press forming member 11 and the flow path upper lid 12 are plated steel sheets having a base steel sheet and Al plating provided on the surface of the base steel sheet. The configuration of the Al plated steel sheet is not particularly limited, but a preferred configuration is as follows.

The sheet thickness of the plated steel sheet forming the press forming member 11 and the flow path upper lid 12 may be 0.3 mm or more. By setting the sheet thickness to 0.3 mm or more, the press formability and the rigidity of the cooling structure 1 can be further improved. The sheet thickness of the plated steel sheet forming the press forming member 11 and the flow path upper lid 12 may be 0.4 mm or more, 0.6 mm or more, or 0.8 mm or more. On the other hand, the sheet thickness of the plated steel sheet forming the press forming member 11 and the flow path upper lid 12 may be 1.2 mm or less. By setting the sheet thickness of the press forming member 11 to 1.2 mm or less, it is easier to bring the press forming member 11 into close contact with the flow path upper lid 12, and the liquid tightness of the flow path is further improved. By setting the sheet thickness of the flow path upper lid 12 to 1.2 mm or less, the cooling efficiency of the cooling structure 1 can be further improved. The sheet thicknesses of the press forming member 11 and the flow path upper lid 12 may be 1.1 mm or less, 1.0 mm or less, or 0.8 mm or less. The press forming member 11 and the flow path upper lid 12 may have different sheet thicknesses. Since the cooling efficiency increases as the sheet thickness decreases, it is preferable that the flow path upper lid 12 is thin.

### (1.4 Configuration of base steel sheet of plated steel sheet)

The base steel sheet of the plated steel sheet forming the press forming member 11 and the flow path upper lid 12 is not particularly limited. For example, in order to further increase the rigidity of the cooling structure 1, the base steel sheet of the flow path upper lid 12 may be a high strength steel sheet having a tensile strength of 980 MPa or more. On the other hand, in order to further enhance the press formability, the base steel sheet of the press forming member 11 may be a soft steel sheet having a tensile strength of about 270 MPa, for example, SPCC. Various forms according to the shape and application of the cooling structure 1 can be applied to the base steel sheet forming the press forming member 11 and the flow path upper lid 12. Examples of the base steel sheet include IF steel to which Ti, Nb, B, or the like is added, Al-k steel, Cr-added steel, stainless steel, high tensile strength steel sheets, low-carbon steel, medium-carbon steel, high-carbon steel, alloy steel, and the like.

### (1.5 Configuration of plating of plated steel sheet)

The Al-based plating of the plated steel sheet forming the press forming member 11 and the flow path upper lid 12 is, for example, two-component or multicomponent plating in which the Al content is 70 mass% or more. It is preferable that the Al-based plating is two-component or multicomponent plating in which Al content is 70 to 98 mass% and Si content is 2.0 to 15 mass%. Si content of the Al-based plating may be 3.0 mass% or more, 4.0 mass% or more, or 5.0 mass% or more. Si content of the Al-based plating may be 14 mass% or less, 12 mass% or less, or 10 mass% or less. By setting the Si content to be within the above range, the workability and corrosion resistance of the Al-based plated steel sheet can be extremely enhanced. As impurity elements in the plating layer, a trace amount of Fe, Ni, Co, or the like may be interposed. In addition, if necessary, Mg, Sn, mischmetal, Sb, Zn, Cr, W, V, Mo, and the like may be contained in the Al-based plating.

The manufacturing method of the Al-based plated steel sheet is not particularly limited. For example, the Al-based plating can be provided by hot-dip plating by a sendzimir method, an all-radiant method, or the like, melt flux plating, electro plating, or vapor deposition plating.

The film thickness of the Al-based plating is not particularly limited. For example, the film thickness of the Al-based plating may be 10 µm or more, 12 µm or more, 15 µm or more, or 20 µm or more. The film thickness of the Al-based plating may be 60 µm or less, 50 µm or less, or 40 µm or less. The larger the film thickness of the Al-based plating is, the higher the inner surface corrosion resistance of the cooling structure 1 is. In addition, as described later, Al can be provided on a surface of the weld metal in the laser weld 13 by setting the film thickness of the Al-based plating, the conditions of laser welding, and the interval between the press forming member and the flow path upper lid within a prescribed range.

### (1.6 Configuration of chemical conversion coating film of plated steel sheet)

In order to further enhance external corrosion resistance and cooling liquid corrosion resistance of the Al-based plated steel sheet or the like, it is preferable that chemical conversion treatment is performed on the surface of the Al-based plated steel sheet or the like. As the chemical conversion treatment, generally known chemical conversion treatment can be used. A chemical conversion coating film containing one or more selected from the group including a Zr-based component, a Ti-based component and a Si-based component as a main component (for example, 50 mass% or more in terms of mass%) is preferably formed. In a case in which the chemical conversion coating film includes two or more of the Zr-based component, the Ti-based component and the Si-based component, a total content of the components may be 50 mass% or more. The chemical conversion coating film may contain an organic component. Hereinafter, the "main component" of the chemical conversion coating film means a component having a proportion of 50 mass% or more in the chemical conversion coating film.

Examples of the chemical conversion coating film include those listed in Japanese Unexamined Patent Application, First Publication No. 2008-115442, Japanese Unexamined Patent Application, First Publication No. 2013-7108, Japanese Unexamined Patent Application, First Publication No. 2004-232040, Japanese Patent Publication No. 3302676, Japanese Patent Publication No. 4776458, and Japanese Patent Publication No. 5336002. Therefore, the chemical conversion coating films listed in these publications can be suitably used as the chemical conversion coating film of the present embodiment. Here, an outline of the chemical conversion coating film will be described.

A first example of the chemical conversion coating film is an example of a film containing a Zr-based component as a main component, and is composed of only Zr, F, P, C, O, N, and H, and does not contain an organic substance having a number average molecular weight of 200 or more. The components are adjusted so that, among the constituent elements of the chemical conversion coating film, a mass ratio Zr/F of Zr to F is 1.0 to 10.0 and a mass ratio Zr/P of Zr to P is 8.5 to 18.0, and a Zr content contained in the chemical conversion coating film is 23.0 mass% to 48.0 mass%. A source of each component of the chemical conversion coating film is composed of one or more inorganic acids selected from the group consisting of carbonic acid, phosphoric acid, and hydrofluoric acid and/or ammonium salts thereof, and a zirconium-containing complex compound excluding zirconium hydrofluoric acid.

A second example of the chemical conversion coating film is an example of a film containing a Zr-based component as a main component, and contains (A) at least one or more among a titanium compound and a zirconium compound, (B) at least one or more among 2 to 6 bonded phosphate esters of myo-inositol, and alkali metal salts, alkaline earth metal salts, and ammonium salts thereof, and (C) silica. In this chemical conversion coating film, a mass ratio of (A) in terms of metal (Zr + Ti) : (B) : (C) is 1 : 0.2 to 1.7 : 0.2 to 5.

Examples of the titanium compound include potassium titanium oxalate, titanyl sulfate, titanium chloride, titanium lactate, titanium isopropoxide, isopropyl titanate, titanium ethoxide, titanium 2-ethyl-1-hexanolate, tetraisopropyl titanate, tetra-n-butyl titanate, and titania sol.

Examples of the zirconium compound include zirconyl nitrate, zirconyl acetate, zirconyl sulfate, zirconyl ammonium carbonate, potassium zirconium carbonate, sodium zirconium carbonate, and zirconium acetate.

Examples of the 2 to 6 bonded phosphate esters of myo-inositol include myo-inositol diphosphate ester, myo-inositol triphosphate ester, myo-inositol tetraphosphate ester, myo-inositol pentane phosphate ester, and myo-inositol hexane phosphate ester.

Examples of the silica include a water-dispersible silica compound. Examples of the water-dispersible silica compound include liquid-phase colloidal silica and gas-phase silica. The liquid-phase colloidal silica is not particularly limited, and examples thereof include SNOWTEX C, SNOWTEX O, SNOWTEX N, SNOWTEX S, SNOWTEX UP, SNOWTEX PS-M, SNOWTEX PS-L, SNOWTEX 20, SNOWTEX 30, SNOWTEX 40 (registered trademark) (all manufactured by Nissan Chemical Industries, Ltd.), ADELITE AT-20N, ADELITE AT-20A, and ADELITE AT-20Q (all manufactured by Asahi Denka Kogyo K.K.).

The gas-phase silica is not particularly limited, and examples thereof include AEROSIL 50, AEROSIL 130, AEROSIL 200, AEROSIL 300, AEROSIL 380, AEROSIL TT600, AEROSIL MOX80, and AEROSIL MOX170 (all manufactured by NIPPON AEROSIL CO., LTD.).

A third example of the chemical conversion coating film is an example of a film containing a Zr-based component as a main component, and is a composite film composed of a zirconium compound, a vanadium compound, a silica compound, a phosphoric acid compound, and an organic compound having at least one functional group among a hydroxyl group, a carbonyl group, and a carboxyl group. This chemical conversion coating film contains 2 to 1200 mg/m² of zirconium, 0.1 to 300 mg/m² of vanadium, and 0.3 to 450 mg/m² of a phosphoric acid compound in terms of PO₄³⁻ per one side of an Al-based plated steel sheet. Furthermore, in the chemical conversion coating film, a content of chromium or a chromium compound is 0.1 mg/m² or less in terms of chromium, and a content of fluorine or a fluorine compound is 0.1 mg/m² or less in terms of fluorine.

Examples of the zirconium compound include zirconyl nitrate, zirconyl acetate, zirconyl sulfate, zirconyl ammonium carbonate, potassium zirconium carbonate, sodium zirconium carbonate, and zirconium acetate.

Examples of the vanadium compound include vanadium pentoxide, metavanadic acid, ammonium metavanadate, sodium metavanadate, vanadium oxytrichloride, vanadium trioxide, vanadium dioxide, vanadium oxysulfate, vanadium oxyacetylacetonate, vanadium acetylacetonate, vanadium trichloride, phosphovanadomolybdic acid, vanadium sulfate, vanadium dichloride, and vanadium oxide.

Examples of the silica compound include a water-dispersible silica compound. Examples of the water-dispersible silica compound include colloidal silica and gas-phase silica, and examples of the colloidal silica include, but are not particularly limited to, SNOWTEX C, SNOWTEX O, SNOWTEX N, SNOWTEX S, SNOWTEX UP, SNOWTEX PS-M, SNOWTEX PS-L, SNOWTEX 20, SNOWTEX 30, SNOWTEX 40 (all manufactured by Nissan Chemical Industries, Ltd.), ADELITE AT-20N, ADELITE AT-20A, and ADELITE AT-20Q (all manufactured by Asahi Denka Kogyo K.K.).

The gas-phase silica is not particularly limited, and examples thereof include AEROSIL 50, AEROSIL 130, AEROSIL 200, AEROSIL 300, AEROSIL 380, AEROSIL TT600, AEROSIL MOX80, and AEROSIL MOX170 (all manufactured by NIPPON AEROSIL CO., LTD.).

The phosphoric acid compound may contain a phosphate ion. As the phosphoric acid compound, for example, orthophosphoric acid (phosphoric acid), metaphosphoric acid, pyrophosphoric acid, and salts such as an ammonium salt, a sodium salt, a calcium salt, and a potassium salt in which some or all of hydrogen ions of these substances are replaced can be used alone or in combination.

Examples of the organic compound having at least one functional group of a hydroxyl group, a carbonyl group, and a carboxyl group include alcohols such as methanol, ethanol, isopropanol, and ethylene glycol; carbonyl compounds such as formaldehyde, acetaldehyde, furfural, acetylacetone, ethyl acetoacetate, dipivaloylmethane, and 3-methylpentanedione; organic acids such as formic acid, acetic acid, propionic acid, tartaric acid, ascorbic acid, gluconic acid, citric acid, and malic acid; monosaccharides such as glucose, mannose, and galactose; oligosaccharides such as maltose and sucrose; natural polysaccharides such as starch and cellulose; aromatic compounds such as tannic acid, humic acid, lignin sulfonic acid, and polyphenol; and synthetic polymers such as polyvinyl alcohol, polyethylene glycol, polyacrylic acid, polyacrylamide, polyethyleneimine, and water-soluble nylon.

The chemical conversion coating film may contain a lubricity-imparting component composed of at least one of a polyolefin-based wax and a paraffin-based wax as an additional component.

A fourth example of the chemical conversion coating film is an example of a film containing a Ti-based component as a main component, and is a film in which an oxide or a hydroxide of a valve metal and a fluoride coexist. Examples of the valve metal include Ti and V. Among them, a tetravalent compound of Ti is a stable compound, and is preferable because a film having excellent characteristics can be formed. Examples of the film containing a Ti-based component as a main component include a film in which an oxide [TiO_{2]}, a hydroxide [Ti(OH)₄], or the like is combined. In this film, a fluoride of Ti, for example, a fluoride such as XₙTiF₆ (X: alkali metal, alkaline earth metal, or NH₄, n = 1 or 2) or TiF₄ coexists.

A fifth example of the chemical conversion coating film is an example of a film containing a Si-based component as a main component, and is a chemical conversion coating film containing an organosilicon compound (silane coupling agent) as a main component. The organosilicon compound is obtained by blending a silane coupling agent (A) containing one amino group in the molecule and a silane coupling agent (B) containing one glycidyl group in the molecule at a solid content mass ratio [(A)/(B)] of 0.5 to 1.7. The organosilicon compound contains, in the molecule, two or more functional groups (a) represented by the formula -SiR¹R²R³ (wherein R¹, R², and R³ each independently represent an alkoxy group or a hydroxyl group, and at least one represents an alkoxy group) and one or more of at least one type of hydrophilic functional groups (b) selected from a hydroxyl group (which is separate from those that can be contained in the functional group (a)) and an amino group, and has an average molecular weight of 1000 to 10000.

A sixth example of the chemical conversion coating film is an example of a film containing a Si-based component as a main component, and is a chemical conversion coating film containing an organosilicon compound (silane coupling agent) as a main component. The organosilicon compound has a cyclic siloxane structure in its structure. Here, the term "cyclic siloxane bond" refers to a cyclic structure having a configuration in which Si-O-Si bonds are continuous and composed only of Si and O bonds and having a Si-O repetition number of 3 to 8.

The organosilicon compound is obtained by blending a silane coupling agent (A) containing at least one amino group in the molecule and a silane coupling agent (B) containing at least one glycidyl group in the molecule at a solid content mass ratio [(A)/(B)] of 0.5 to 1.7. It is preferable that the organosilicon compound (W) thus obtained contains, in the molecule, two or more functional groups (a) represented by the formula -SiR¹R²R³ (wherein R¹, R², and R³ each independently represent an alkoxy group or a hydroxyl group, and at least one of R¹, R², and R³ represents an alkoxy group) and one or more of at least one type of hydrophilic functional groups (b) selected from the group consisting of a hydroxyl group (which is separate from hydroxyl groups that can be contained in the functional group (a)) and an amino group, and has an average molecular weight of 1000 to 10000.

Examples of the chemical conversion coating film of the present embodiment are not limited to the above.

A method of forming the chemical conversion coating film described above is not particularly limited, and a chemical conversion coating solution (film coating solution) corresponding to each composition described above may be applied to a Al-based plated steel sheet by a known method, and baked and dried.

### (1.7 Configuration of flow path)

Next, a configuration of the flow path 14 of the cooling structure 1 according to the present embodiment will be described.

In order to enhance the cooling efficiency of the cooling structure 1, it is preferable to increase the contact area between the cooling liquid and the flow path upper lid 12, that is, to increase the area of the region facing the flow path 14 in the flow path upper lid 12. Therefore, the flow path 14 has a parallel flow path portion 141 in which a plurality of partial flow paths 1411 extending along the first direction are arranged in the second direction orthogonal to the first direction. The first direction is, for example, a longitudinal direction or a lateral direction of the cooling structure 1. By providing parallel flow path portions 141 in which a plurality of partial flow paths 1411 are arranged in parallel, it is possible to increase a contact area between the cooling liquid and the flow path upper lid 12. However, in order to ensure more excellent cooling efficiency, the present inventors have made further investigations.

As means for further increasing the contact area between the cooling liquid and the flow path upper lid 12, it has been considered to increase the width W of the partial flow path 1411. However, the larger the width W of the partial flow path 1411, the larger the stress applied to the laser weld 13, and the life of the cooling structure 1 may be reduced. In addition, when the width W of the partial flow path 1411 is too wide, the cooling liquid does not stably flow in the extending direction of the partial flow path 1411, that is, along the first direction, and there is a possibility that cooling unevenness occurs.

Another means for further increasing the contact area between the cooling liquid and the flow path upper lid 12 is to narrow an interval D between the partial flow paths 1411. According to this means, it is possible to enhance cooling efficiency while preventing an increase in stress applied to the laser weld 13 and occurrence of cooling unevenness. For the above reason, in the cooling structure 1 according to the present embodiment, the interval D between the adjacent partial flow paths 1411 is set to 20 mm or less in a part or a whole of the parallel flow path portion 141. The interval D between the partial flow paths 1411 may be 18 mm or less, 16 mm or less, or 15 mm or less. The lower limit of the interval D between the partial flow paths 1411 is not particularly limited, but the interval D may be 0.8 mm or more, 1 mm or more, 3 mm or more, 5 mm or more, or 8 mm or more from the viewpoint of preventing joining failure.

The interval D between the partial flow paths 1411 is preferably within the above-described range in the entire parallel flow path portion 141. However, for example, by disposing another component such as a screw hole between the partial flow paths 1411, the interval D between the partial flow paths 1411 may be more than 20 mm in a part of the parallel flow path portion 141. In other words, the interval D between the partial flow paths 1411 may be within the above-described range in a part of the parallel flow path portion 141.

The width W of the partial flow path 1411 is not particularly limited as long as the interval D between the partial flow paths 1411 is within the above range. From the viewpoint of further increasing the contact area between the flow path forming portion and the flow path upper lid 12, the width W of the partial flow path 1411 may be 6 mm or more, 8 mm or more, of 10 mm or more. Meanwhile, the width W of the partial flow path 1411 may be set to 60 mm or less, 30 mm or less, 25 mm or less, or 20 mm or less from the viewpoint of further enhancing the joining strength between the press forming member 11 and the flow path upper lid 12 and further enhancing the uniformity of cooling. The height of the partial flow path 1411 is also not particularly limited, but may be, for example, 1 mm or more in order to further improve the cooling efficiency. On the other hand, in order to reduce the weight of the cooling structure 1, the height of the partial flow path 1411 may be 10 mm or less. The shape of the partial flow path 1411 described above may be applied to the partial flow path forming the flow path connecting portion 142.

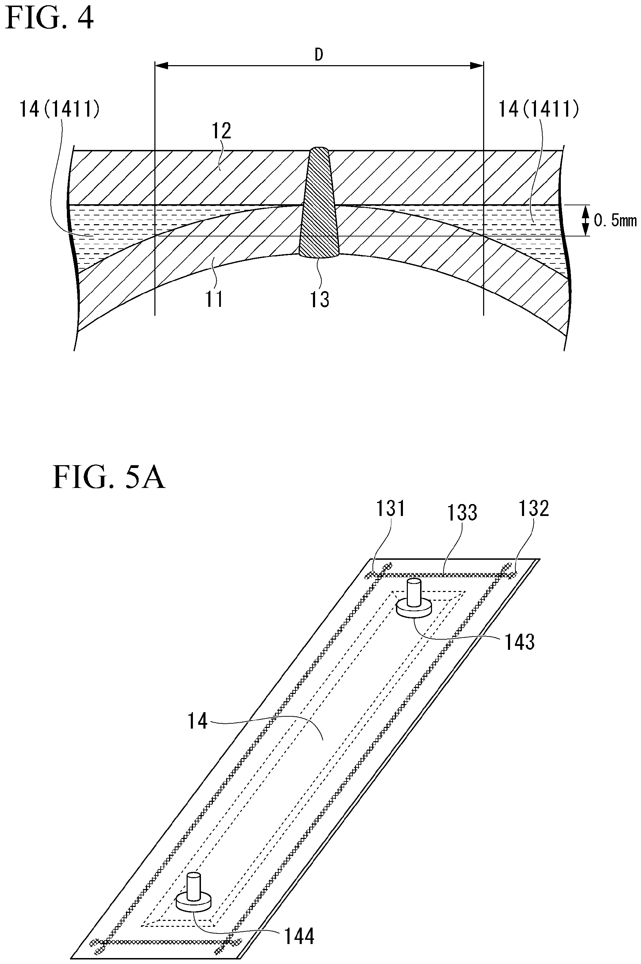

In the cooling structure 1 according to the present embodiment, the flow path 14 and the partial flow path 1411 included in the flow path mean a space through which a cooling liquid easily flows and which exhibits a substantial cooling effect. Therefore, as illustrated in FIG. 4, the flow path 14 and the partial flow path 1411 are defined as spaces between the flow path upper lid 12 and the press forming member 11, the spaces having a thickness of 0.5 mm or more along a direction perpendicular to the flow path upper lid 12. The interval D between the partial flow paths 1411 is an interval between spaces defined above. That is, the interval D between the partial flow paths 1411 is the total length of the laser weld 13, the width of the region where the flow path upper lid 12 and the press forming member 11 are in contact with each other, and the width of the region where the gap between the flow path upper lid 12 and the press forming member 11 is less than 0.5 mm. Although not illustrated in FIG. 4, the width W of the partial flow path 1411 is the width of the space defined as described above. That is, the width W of the partial flow path 1411 is a width of a space having a thickness of 0.5 mm or more along a direction perpendicular to the flow path upper lid 12. In addition, the interval D between the partial flow paths 1411 and the width W of the partial flow path are values measured along a second direction perpendicular to the first direction which is the extending direction of the partial flow path 1141.

### (1.8 Configuration of laser weld)

In order to set the interval D between the partial flow paths 1411 within the above-described range, in the cooling structure 1 according to the present embodiment, a joint portion for forming the flow path 14 is the laser weld 13. In the laser welding, the bead width can be reduced. Therefore, it is effective joining means for narrowing the interval D between the partial flow paths 1411. In addition, since the laser welding forms a linear bead, it is possible to enhance the liquid tightness of the flow path 14 as compared with a point joining means such as spot welding.

The configuration of the laser weld 13 is not particularly limited, and various configurations corresponding to the shape of the flow path 14 can be adopted. Hereinafter, a preferred aspect of the laser weld 13 will be described.

For example, the bead width on the laser radiation side, that is, the wider one of the bead width of the surface of the laser weld 13 in the flow path upper lid 12 and the bead width of the surface of the laser weld 13 in the press forming member 11, may be set to 0.8 to 1.5 mm. By setting the bead width to 0.8 mm or more, the liquid tightness of the flow path 14 can be further enhanced. On the other hand, by setting the bead width to 1.5 mm or less, evaporation of plating in the vicinity of the bead can be prevented, and corrosion resistance of the cooling structure 1 can be further enhanced.

Moreover, the laser weld 13 may be formed so as to satisfy all of the following three requirements:
(1) The width of the wider one of the bead in the laser weld 13 is set to 0.8 to 1.5 mm as described above;
(2) The film thickness of the Al-based plating included in the plated steel sheet which forms the press forming member 11 and the flow path upper lid 12 is set to 10.0 µm or more as described above; and
(3) In the vicinity of the laser weld 13, an interval between the press forming member 11 and the flow path upper lid 12 is set to 0.3 mm or less.

When the laser weld 13 is formed with satisfying the requirements (1) to (3), a part of or whole of the surface of the laser weld 13 between the press forming member 11 and the flow path upper lid 12 is covered with Al-based plating. Thereby, the cooling liquid corrosion resistance of the cooling structure is further enhanced.

In general, laser welding melts and solidifies the base steel sheet and Al-based plating, and thus, Al plating is not exist on a surface of the weld metal forming the laser weld. However, the present inventors welded the Al-based plated steel sheet under a various conditions and investigated the weld metal obtained thereby, and it was found that, in the weld metal obtained by laser welding satisfying all of the above-described requirements (1) to (3), the surface thereof between the press forming member 11 and the flow path upper lid 12 was covered with the Al-based plating. The cause is not clear, but it is assumed that the Al-based plating surrounding the laser weld is melted by the heat of the laser welding and moves to the surface of the weld metal in the laser weld 13.

The presumed mechanism is specifically described as below. At first, the bead width according to the above-described requirement (1) strongly correlates with the amount of heat input during laser welding. It is assumed that when the bead width is too large, the heat input during laser welding is too large so that Al-based plating vanishes in a wide range surrounding the weld metal, thereby the melted Al-based plating does not move to the surface of the weld metal. On the other hand, when the bead width is too small, the press forming member 11 and the flow path upper lid 12 may not be sufficiently joined.

It is assumed that when the film thickness of the plating according to the above described requirement (2) is too small, the melted Al-based plating is insufficient, thereby the melted Al-based plating does not move to the surface of the weld metal. In addition, it is assumed that when the interval of the plated steel sheet according to the above-described requirement (3) is too large, the weld metal becomes too large, thereby the melted Al-based plating does not cover the weld metal.

The interval of the plated steel sheet according to the above-described requirement (3) is an interval between the press forming member and the flow path upper lid measured in the vicinity of the laser weld 13. The vicinity of the laser weld 13 is an area within 0.1 mm from the weld metal included in the laser weld 13. In the area within 0.1 mm from the weld metal, the interval between the press forming member and the flow path upper lid is substantially uniform and the interval can measured in any places included in the area. Moreover, even in a case of substantially arc shape, the variation of the interval between the plated steel sheets is small in the range, and the value measured in the range can be recognized as the interval between the plated steel sheets.

The interval between the press forming member 11 and the flow path upper lid 12 in the vicinity of the laser weld 13 is preferably 0.2 mm or less, 0.1 mm or less, or 0.05 mm or less.

For example, as illustrated in FIG. 5A, the laser weld 13 includes a start position 131, an end position 132, and a middle portion 133 therebetween. The start position 131 of the laser weld 13 is a portion corresponding to a portion where the laser welding is started, and the end position 132 of the laser weld 13 is a portion corresponding to a portion where the laser welding is finished. In the present embodiment, it is not necessary to distinguish the start position 131 and the end position 132. Since the start position 131 and the end position 132 are clearly different in width and the like from the middle portion 133, the start position 131 and the end position 132 can be clearly distinguished from the middle portion 133.

The middle portion 133 tends to have less welding defects than the start position 131 and the end position 132, and thus have more excellent corrosion resistance and liquid tightness. Therefore, it is preferable that the flow path 14 is formed using the middle portion 133 of the laser weld 13 and is separated from the start position 131 and the end position 132. In other words, as illustrated in FIG. 5A, it is preferable that laser welding is performed such that the middle portion 133 of the laser weld 13 is disposed between the start position 131 and the end position 132 of the laser weld 13 and the flow path 14. This makes it possible to prevent the start position 131 and the end position 132 from being exposed to the cooling liquid.

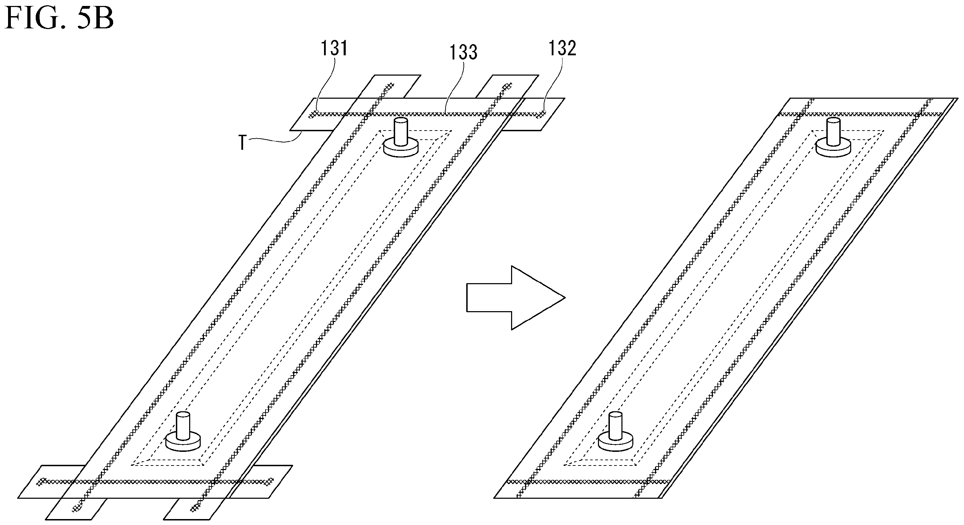

As illustrated in FIG. 5B, it is more preferable that start position 131 and end position 132 of the laser weld 13 are omitted from the cooling structure 1. For example, a tab plate T is provided on the flow path upper lid 12 or the press forming member 11 before being laser welded, laser welding is performed so that the start position 131 and the end position 132 are formed on the tab plate T, and then the tab plate T is cut and removed, whereby the cooling structure 1 not including the start position 131 and the end position 132 of the laser weld 13 can be obtained.

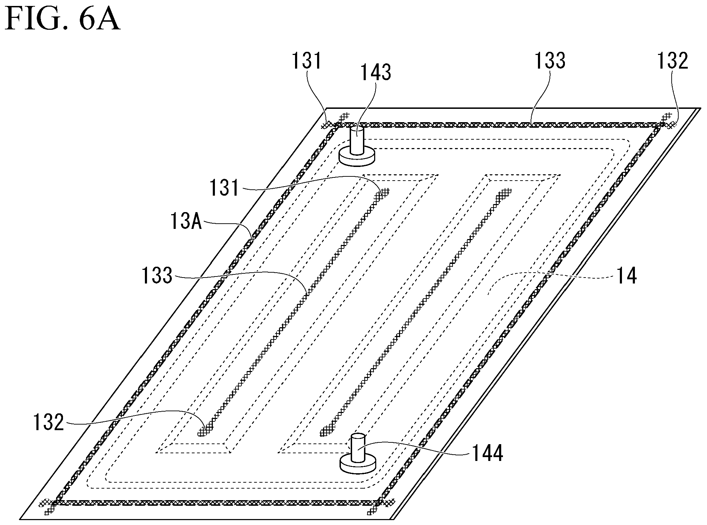

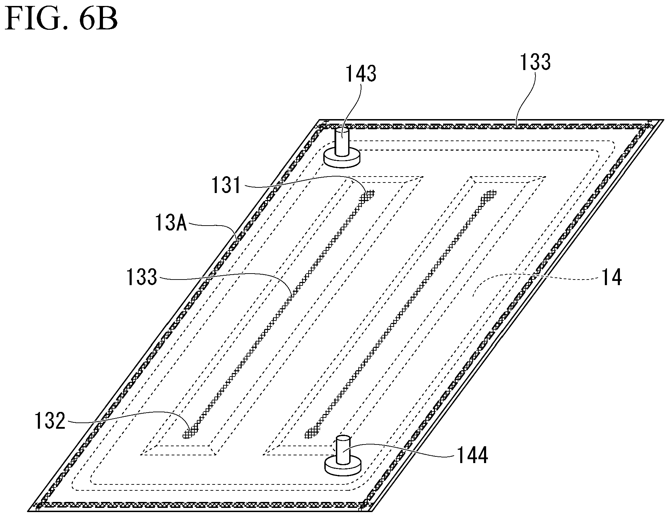

In the cooling structure 1, a configuration in which the start position 131 and the end position 132 are omitted only at a portion where liquid leakage is concerned may be applied. For example, in the cooling structure 1 illustrated in FIGS. 6A and 6B, when flow path upper lid 12 is peeled off from press forming member 11 at a portion (dark color portion denoted by reference numeral 13A) provided along the outer edge of press forming member 11 and flow path upper lid 12 in laser weld 13, the cooling liquid leaks to the outside of the cooling structure 1. On the other hand, in the cooling structure 1 illustrated in FIGS. 6A and 6B, even if the flow path upper lid 12 is peeled off from the press forming member 11 at the laser weld 13 provided in a region surrounded by the flow path 14, cooling water does not leak out of the cooling structure 1. Therefore, when a portion of the laser weld 13 surrounding all of the flow paths 14 (dark color portion denoted by reference numeral 13A) is defined as a flow path outer edge weld 13A, it is preferable that the start position 131 and the end position 132 are omitted from the flow path outer edge weld 13A. In this case, even if the laser weld 13 excluding the flow path outer edge weld 13A includes the start position 131 and the end position 132, it is possible to sufficiently suppress a situation in which the cooling water leaks to the outside of the cooling structure 1.

Similarly to FIG. 5A, the cooling structure 1 illustrated in FIG. 6A is obtained by manufacturing the flow path outer edge weld 13A using only the middle portion 133 of the laser weld 13. In this case, the start position and the end position are omitted from the flow path outer edge weld 13A, but are left in the cooling structure 1. On the other hand, as in FIG. 5B, the cooling structure 1 illustrated in FIG. 6B is obtained by providing the tab plate T on the flow path upper lid 12 or the press forming member 11 before being laser welded, performing laser welding so that the start position 131 and the end position 132 are formed on the tab plate T, and then cutting and removing the tab plate T. In this case, the start position and the end position generated at the time of forming the flow path outer edge weld 13A do not remain in the cooling structure 1. In addition, when laser radiation is started from a position in which the flow path upper lid 12 and the press forming member 11 are not exposed to the laser, laser welding is performed, laser radiation is performed to a position in which the flow path upper lid 12 and the press forming member 11 are not exposed to the laser to run through, and laser radiation is then stopped, the start position and the end position in the formation of the flow path outer edge weld 13A do not remain in the cooling structure 1.

In the flow path upper lid 12, a bead height of the laser weld 13 may be 0.3 mm or less. By setting the bead height of the laser weld 13 to 0.3 mm or less, a gap between the flow path upper lid 12 and a cooling target (for example, a battery pack or a battery cell) can be reduced, and cooling efficiency can be further enhanced. The bead height of the laser weld 13 may be reduced, for example, through control of laser welding conditions. In addition, the bead height may be reduced by grinding the bead after the end of the laser welding.

### (1.9 Other configurations)

As illustrated in FIG. 2A, the flow path connecting portion 142 that communicates the plurality of partial flow paths 1411 may be further provided in the flow path 14. In addition, the cooling liquid inlet 143 and the cooling liquid outlet 144 for introducing a cooling liquid into the flow path may be further provided in the flow path 14. In a case where the flow path 14 has the flow path connecting portion 142, the flow path 14 forms one space. In this case, one cooling liquid inlet 143 and one cooling liquid outlet 144 may be provided in the cooling structure 1. On the other hand, the flow path connecting portion 142 may not be provided in the cooling structure 1. In this case, the cooling liquid inlet 143 and the cooling liquid outlet 144 may be provided in each of the plurality of partial flow paths 1411. Only a part of the plurality of partial flow paths 1411 may be communicated by the flow path connecting portion 142, and the flow path 14 may form two or more spaces.

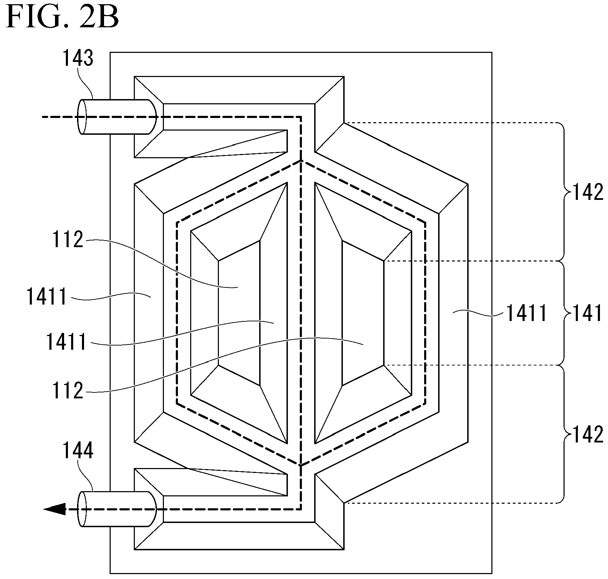

In FIG. 2A and the like, each of the two flow path connecting portions 142 is one straight flow path, and the flow path connecting portion 142 communicates with all the partial flow paths 1411 to be orthogonal thereto. However, the shape of the flow path connecting portion 142 and the arrangement of the flow path connecting portion 142 and the partial flow path 1411 are not limited thereto. For example, the angle formed by the flow path connecting portion 142 and the partial flow path 1141 is not limited to 90°, and can be appropriately selected according to the use of the cooling structure 1. The flow path connecting portion 142 may have a branch structure. As shown in FIG. 2B, each of the two flow path connecting portions 142 may be branched in a fan shape starting from the cooling liquid inlet 143 or the cooling liquid outlet 144, and communicate with each of the partial flow paths 1411 at various angles at the branch destination. In FIG. 2B, the laser weld 13 is omitted.

Between the press forming member 11 and the flow path upper lid 12, 30% or more of the surface of the laser weld 13 may be covered with the Al-based plating. Thereby, the cooling liquid corrosion resistance of the laser weld 13 is enhanced so that the cooling liquid corrosion resistance of the cooling structure 1 is further enhanced.

The cover ratio of the Al-based plating with respect to the laser weld 13 is measured in accordance with the following procedures.

At first, any one of the partial flow paths 1411 included in the cooling structure is cut in a direction perpendicular to the first direction, i.e. perpendicular to the extending direction of the partial flow path 1411. The position which is cut is three points in total, including a middle point between the both ends of the partial flow path 1411, and two middle points between said middle point and the end portion of the partial flow path 1411. When the above-described flow path connecting portion 142 is included in the cooling structure 1, the both ends of the partial flow path 1411 are positions at which the partial flow path 1411 and the flow path connecting portion 142 join, and when the flow path connecting portion 142 is not included in the cooling structure 1, the both ends of the partial flow path 1411 are positions at which the cooling liquid inlet 143 and the cooling liquid outlet 144 are provided.

Next, microphotographs of the laser weld 13 in the cut surfaces of above-described three positions are taken.

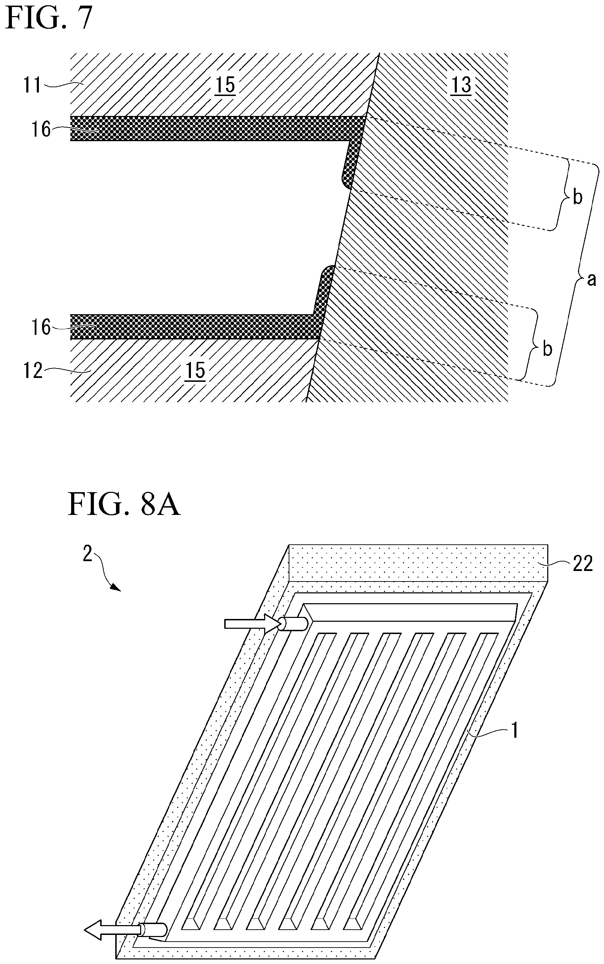

And then, as shown in FIG. 7, the cover ratio in each cross sections is measured in which length a of the surface of the weld metal forming the laser weld 13 in the cross section is a denominator and a total of the length b along to the surface of the weld metal of the Al-based plating adhering on the surface of the weld metal is a numerator. Moreover, the average of the cover ratio in three cross sections are calculated, and recognized as the cover ratio of the Al-based plating with respect to the laser weld 13. Laser weld is a joining method forming a weld metal which is uniform along with the weld direction. Therefore, the cover ratio in entire cooling structure 1 can be estimated based on the value obtained by the above-described method.

In FIG. 7, the symbol 17 indicates the base steel sheet and the symbol 16 indicates the Al-based plating.

The shape in a plane view of the press forming member 11 and the flow path upper lid 12 forming the cooling surface of the cooling structure 1 is not particularly limited. For example, in a case where the use of the cooling structure 1 is cooling of a battery of an EV, the plane view shape of the flow path upper lid 12 is desirably rectangular. In this case, the size of the flow path upper lid 12 in a plane view is preferably 1000 mm to 2300 mm in the longitudinal direction and 200 mm to 1500 mm in the lateral direction. Similarly, the size of the press forming member 11 in a plane view is preferably 1000 mm to 2300 mm in the longitudinal direction and 200 mm to 1500 mm in the lateral direction. When the cooling structure 1 in which the press forming member 11 and/or the flow path upper lid 12 has a large area and the interval D between the flow paths is narrow is manufactured, a bonding failure between the bank part 112 and the flow path upper lid 12 tends to be a problem. However, for example, according to a manufacturing method described later, a bonding failure can be easily avoided.

The size of the flow path upper lid 12 in the longitudinal direction in a plane view may be 1200 mm or more, 1400 mm or more, or 1600 mm or more. The size of the flow path upper lid 12 in the longitudinal direction in a plane view may be 2200 mm or less, 2000 mm or less, or 1800 mm or less. The size of the flow path upper lid 12 in the lateral direction in a plane view may be 250 mm or more, 500 mm or more, or 700 mm or more. The size of the flow path upper lid 12 in the lateral direction in a plane view may be 1400 mm or less, 1300 mm or less, or 1200 mm or less.

The size of the press forming member 11 in the longitudinal direction in a plane view may be 1200 mm or more, 1400 mm or more, or 1600 mm or more. The size of the press forming member 11 in the longitudinal direction in a plane view may be 2200 mm or less, 2000 mm or less, or 1800 mm or less. The size of the press forming member 11 in the lateral direction in a plane view may be 250 mm or more, 500 mm or more, or 700 mm or more. The size of the press forming member 11 in the lateral direction in a plane view may be 1400 mm or less, 1300 mm or less, or 1200 mm or less.

As described above, in order to enhance the cooling efficiency of the cooling structure 1, it is preferable to increase the contact area of the cooling liquid and the flow path upper lid 12.

As described above, in the cooling structure according to the first embodiment, the outer surface corrosion resistance and the cooling liquid corrosion resistance can be enhanced by using the Al-based plated steel sheets as the press forming member 11 and the flow path upper lid 12. As a result, it is possible to suppress flow path corrosion and to suppress occurrence of contamination that causes a decrease in thermal conductivity and clogging.

In the cooling structure according to the first embodiment, by laser welding the press forming member 11 and the flow path upper lid 12, the interval D between the partial flow paths 1411 in the parallel flow path portion 141 is set to 20 mm or less, and the area where the cooling liquid and the flow path upper lid 12 are in contact with each other is increased, so that the cooling efficiency can be improved.

In addition, in the cooling structure according to the first embodiment, the press forming member 11 and the flow path upper lid 12 are laser welded, whereby the liquid tightness of the flow path 14 can be enhanced.

### (2. Battery unit)

Next, a battery unit according to a second embodiment of the present invention will be described. As illustrated in FIGS. 8A to 8C, the battery unit 2 according to the present embodiment includes a battery cell 21, a battery pack 22 in which the battery cell 21 is housed, and the cooling structure 1 according to the first embodiment.

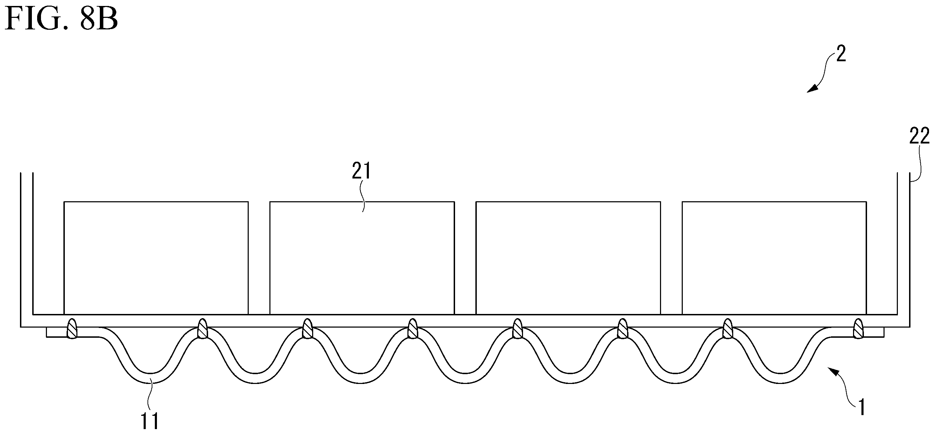

When the cooling structure 1 is incorporated into the battery unit 2, as shown in FIG. 8B, the battery pack 22 can be used as the flow path upper lid 12 of the cooling structure 1. In other words, the bank part 112 of the press forming member 11 and the battery pack 22 can be laser welded. By integrating the battery pack 22 and the cooling structure 1, the battery unit 2 can extremely efficiently cool the battery cell 21.

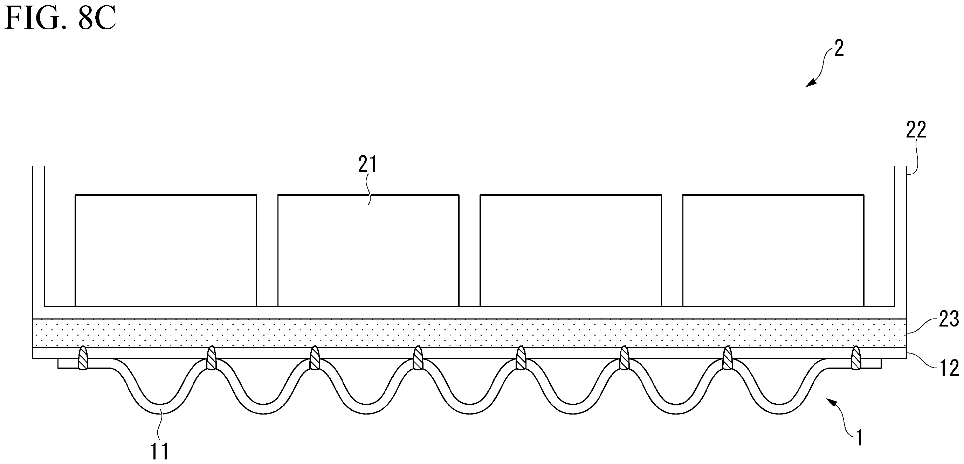

On the other hand, a structure in which the battery pack 22 and the cooling structure 1 are separated may be adopted. For example, the battery unit 2 may be manufactured by joining the flow path upper lid 12 and the battery pack 22. In this case, as illustrated in FIG. 8C, a gap filler 23 may be disposed between the flow path upper lid 12 and the battery pack 22. For some reason (dimensional accuracy error, complicated irregularity shape formed in the battery pack 22, and the like), it may be difficult to join the battery pack 22 and the flow path upper lid 12 of the cooling structure 1 without a gap. In such a case, the gap filler 23 can be used. The gap filler 23 is generally a resin containing a pigment having high thermal conductivity. By inserting the gap filler 23 between different substances, heat exchange efficiency can be improved. In the present embodiment, the thermal conductivity of the gap filler 23 is preferably 3.5 W/m or more. An example of the gap filler 23 is "SDP-3540-A" manufactured by Shin-Etsu Chemical Co., Ltd. The thickness of the gap filler is preferably 0.1 mm to 8.0 mm, and more preferably 0.5 mm to 3.0 mm.

The configuration of the battery pack 22 is not particularly limited. For example, the battery pack 22 may have a substantially rectangular shape, and the cooling structure 1 may be disposed on the bottom surface portion thereof, or the bottom surface portion thereof may be used as the flow path upper lid 12 of the cooling structure 1. In addition, form the viewpoint of improving corrosion resistance, the steel sheet forming the battery pack 22 is preferably an Al-based plated steel sheet or a Zn-based plated steel sheet. However, in a case where a structure in which the battery pack 22 and the cooling structure 1 are separated as illustrated in FIG. 8C is adopted, it is not essential to impart cooling liquid corrosion resistance to a portion of the battery pack 22 to which the cooling structure 1 is attached, for example, a bottom surface portion.

The thickness of the Al-based plated steel sheet forming the bottom surface portion of the battery pack 22 is not particularly limited, but is, for example, preferably 0.2 to 1.2 mm or 0.3 to 1.2 mm, and more preferably 0.4 to 0.6 mm. In this case, the bottom surface portion can be formed thin while maintaining a strength of the bottom surface portion of the battery pack 22. Therefore, since a distance between a cooling liquid and an internal structure of the battery pack 22 can be narrowed, cooling efficiency of the battery pack 22 can be enhanced, and cooling responsiveness of the battery pack 22 can be enhanced.

### (3. Manufacturing method of cooling structure)

Next, a manufacturing method of a cooling structure according to a third embodiment of the present invention will be described. The manufacturing method of the cooling structure according to the third embodiment includes press-forming (S1) a plated steel sheet to obtain a press forming member 11, and laser welding (S2) the press forming member and the flow path upper lid. Details of these steps will be described below. According to this manufacturing method, the cooling structure according to the first embodiment can be suitably manufactured. However, the following description does not limit the manufacturing method of the cooling structure according to the first embodiment.

### (S1 Press forming)

In the manufacturing method of the cooling structure according to the present embodiment, first, a plated steel sheet is press-formed. As a result, the press forming member 11 having the groove part 111 and the bank part 112 provided around the groove part 111 is obtained. A plated steel sheet subjected to press forming includes a Al-based plating. A preferred aspect of the plated steel sheet is as described above. In the cooling structure 1 finally obtained, the flow path 14 includes the parallel flow path portion 141 in which the plurality of partial flow paths 1411 extending along the first direction are arranged in the second direction orthogonal to the first direction, and in the parallel flow path portion 141, the interval D between the adjacent partial flow paths 1411 is 20 mm or less. In order to achieve such a shape of the flow path 14, it is necessary to form the groove part 111 in press forming.

### (S2 Laser welding)

Next, the flow path upper lid 12, which is a flat sheet, is placed on a position covering the groove part 111 of the press forming member 11, and the flow path upper lid 12 and the bank part 112 of the press forming member 11 are laser welded. As a result, the laser weld 13 forming the flow path 14 through which the cooling liquid is capable of flowing is obtained.

The laser welding conditions are not particularly limited, and suitable conditions according to the sheet thickness of the plated steel sheet and the like can be appropriately adopted. Examples of further preferred laser welding conditions are as follows. When the film thickness of the Al-based plating is 10.0 µm or more and the interval between the press forming member 11 and the flow path upper lid 12 in the vicinity of the laser weld is 0.3 mm or less, it is preferable that a beam diameter is set to 0.2 to 0.8 mm and a heat input per unit welding length is set to 30 to 120 kJ/m. Thereby, a part or whole of the surface of the laser weld 13 between the press forming member 11 and the flow path upper lid 12 can be covered with the Al-based plating by melting the Al-based plating surrounding the weld and moving the Al-based plating to the surface of the laser weld 13. It is more preferable that the beam diameter is 0.4 to 0.6 mm and the heat input per unit welding length is set to 30 to 60 kJ/m.

### [Examples]

The effect of one aspect of the present invention will be described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

### (Example 1 Relationship between flow path interval, availability of assembly, and performance of cooling structure)

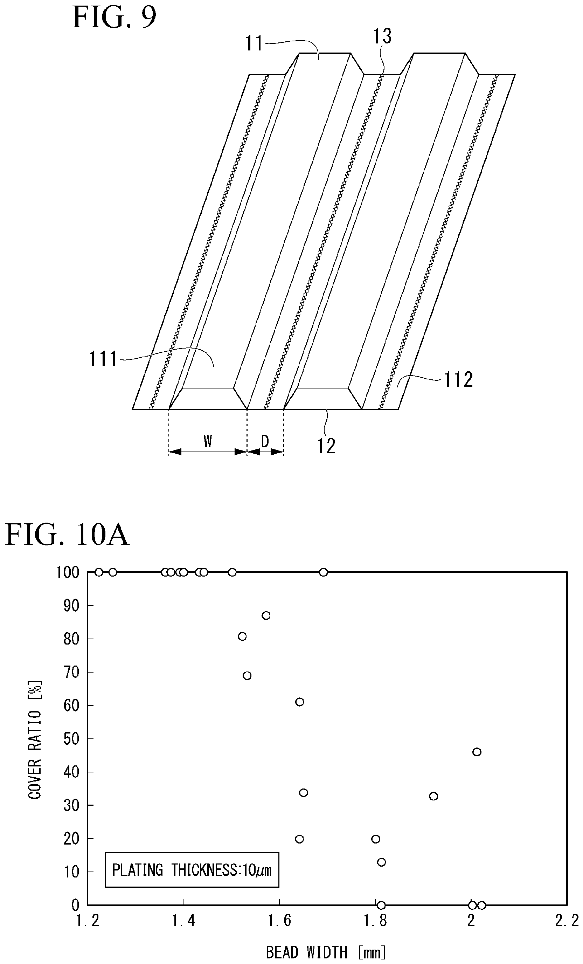

The Al-based plated steel sheet was press-formed to prepare a press forming member. The press forming member and a flow path upper lid formed of the flat sheet of the Al-based plated steel sheet were laser welded to produce a cooling structure. The flow path width and the flow path interval of the plurality of partial flow paths extending in parallel are shown in Table 1. The manufacture conditions not included in Table 1 were as follows. The flow path connecting portion communicating the partial flow paths was not created.
· Type of plated steel sheet: Aluminum plated mild steel sheet having a sheet thickness of 0.5 mm (using Al - 9% Si plated steel sheet)
· Laser welding machine: Fiber laser welding machine
· Heat input condition during laser welding: 45000 J/m
· Shape of cooling structure of examples: described in FIG. 9
· Partial flow path length: 200 mm
· Partial flow path height: 10 mm

FIG. 9 is a schematic diagram of a part of the manufactured cooling structure. For convenience, only two partial flow paths are illustrated in FIG. 9, but actually, the number of partial flow paths capable of covering a battery having a width of 120 mm is provided in the cooling structure. In any of the examples shown in Table, the cooling structure could be assembled by laser welding.

The evaluation results of the cooling structure created as described above are also shown in Table 1. The evaluation criteria were as described below.

With respect to the flow path width W of the partial flow path, those having a width of 20 mm or less were rated as "S", those having a width of more than 20 mm and 30 mm or less were rated as "A", and those having a width of more than 30 mm were rated as "B". This is because the flow of the cooling liquid can be stabilized and the cooling efficiency can be further improved as the flow path width W is smaller.

"D/2" is a value obtained by dividing the interval D between the plurality of partial flow paths by 2. This value is the maximum distance along the flow path width direction at a location where the partial flow path and the partial flow path are not in direct contact with each other, and is preferably as small as possible. If the D/2 is too large, cooling of a portion not in contact with the flow path becomes insufficient, and there is a possibility that a sufficient function as a cooling structure cannot be exhibited. A sample having a D/2 of 7.5 mm or less was rated as "A", a sample having a D/2 of more than 7.5 mm and 10 mm or less was rated as "B", and a sample having a D/2 of more than 10 mm was rated as "C". A sample evaluated as Rank A or Rank B was determined to have a sufficiently narrow flow path interval.

**[Table 1]**

| Flow path width W (mm) | Flow path interval D (mm) | D/2 (mm) | Flow path width determination | D/2 determination |
|---|---|---|---|---|
| 60 | 25 | 12.5 | B | c |
| 60 | 20 | 10.0 | B | B |
| 60 | 15 | 7.5 | B | A |
| 60 | 10 | 5.0 | B | A |
| 60 | 5 | 2.5 | B | A |
| 30 | 25 | 12.5 | A | c |
| 30 | 20 | 10.0 | A | B |
| 30 | 15 | 7.5 | A | A |
| 30 | 10 | 5.0 | A | A |
| 30 | 5 | 2.5 | A | A |
| 20 | 25 | 12.5 | S | c |
| 20 | 20 | 10.0 | S | B |
| 20 | 15 | 7.5 | S | A |
| 20 | 10 | 5.0 | S | A |
| 20 | 5 | 2.5 | S | A |
| 10 | 25 | 12.5 | S | c |
| 10 | 20 | 10.0 | S | B |
| 10 | 15 | 7.5 | S | A |
| 10 | 10 | 5.0 | S | A |
| 10 | 5 | 2.5 | S | A |

All examples shown in Table 1 were manufacturable by laser welding. Therefore, it can be seen that, in the case of laser welding, it is possible to manufacture a partial flow path that can exhibit high cooling performance even when the partial flow path width is 10 mm, which is the narrowest among the prepared partial flow paths.

### (Example 2 Relationship between bead width and cover ratio)

Various cooling structures were manufactured in which heat input condition was varied within a range of 30 to 120 kJ/m by which the width of the wider one of the bead of the laser weld in the flow path upper lid and the bead of the laser weld in the press forming member (hereinafter, referred as "bead width") was within 1.2 mm to 2.2 mm. The interval between the flow path upper lid and the press forming member in the vicinity of the laser weld was within a range of 0 to 0.2 mm. The film thickness of the plating was 10 µm or 60 µm. In the laser welding, plated steel sheets having same film thickness were combined.

Next, a cross section of the laser weld was observed, and it was determined whether or not the surface of the laser weld between the press forming member and the flow path upper lid was covered with the Al-based plating. Moreover, the ratio of the area of the Al-based plating covering the laser weld with respect to the surface area of the laser weld (hereinafter, referred as "cover ratio") was measured. The method for measuring the cover ratio was the method as described above by referring FIG. 7.

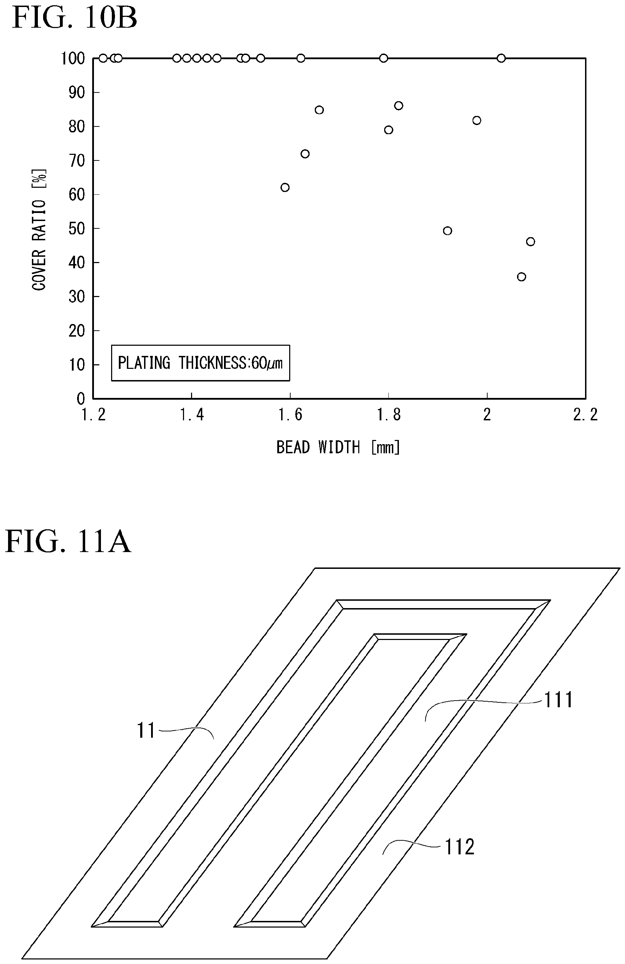

A relationship between the bead width and the cover ratio in a cooling structure manufactured from the steel sheet of which the film thickness of the plating was 10 µm is shown in FIG. 10A. A relationship between the bead width and the cover ratio in a cooling structure manufactured from the steel sheet of which the film thickness of the plating was 60 µm is shown in FIG. 10A. In all examples in which the bead width was 1.5 mm or less, the entire surface of the laser weld was covered with the Al-based plating. It is assumed that these examples have high inner surface corrosion resistance. In addition, in a case in which the bead width was more than 1.5 mm, a trend was confirmed that the broader the bead width was, the smaller the cover ratio was.

### (Example 3 Evaluation of corrosion resistance)

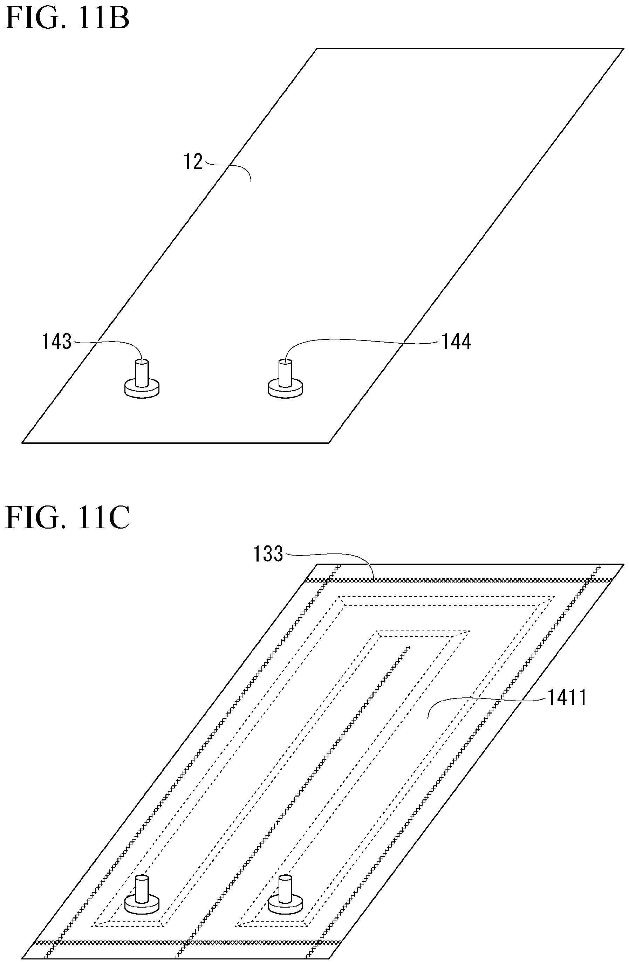

Various cooling structures on which welding method, interval between partial flow paths, distance between steel sheets, film thickness of plating, and amount of heat input of laser welding shown in Table 2 were applied were manufactured. The distance between steel sheets was an interval between the flow path upper lid and the press forming member at a place at which laser welding is performed, and was adjusted by inserting a spacer having a thickness identical to the objective distance between steel sheets at a place in which the spacer did not disturb the welding. However, in manufacturing of the cooling structure No. 1, laser welding was not used but spot welding using typical welding electrode having ϕ16mm of electrode diameter was used. Regarding the cooling structure No. 1 manufactured by spot welding, description of an amount of heat input was omitted. In the examples other than No. 21, the shapes of the press forming member and the flow path upper lid before welding were as shown in FIGS. 11A and 11B, and the shape of the flow path was as illustrated in FIG. 11C. In the example No. 21, the cross-sectional shape of the partial flow path is the waveform shown in FIG. 3, but the same shape as other examples was adopted except for this. In any example, the flow path shape in a plane view is a U shape, and two flow paths extending in the longitudinal direction correspond to the partial flow path. The flow path width was 20 mm in all cooling structures. The bead width of the manufactured cooling structures was measured and described in Table 3. The bead width described in Table 3 is the width of the wider one of the bead of the laser weld in the flow path upper lid and the bead of the laser weld in the press forming member.

In addition, a pump was connected with the cooling structure and long-life coolant (LLC) aqueous solution was circulated. A filter was connected between the pump and the cooling structure, and when the corrosion product caused, the corrosion product was prevented from intruding into the pump. Under a condition in which a pressure in the flow path was 1.5 atm and a temperature of LLC was 50°C, LLC was circulated by 100 hours. Then, state of inner plating, bead width, and inner surface corrosion resistance were evaluated in accordance with the following method and were described in Table 3.

State of inner plating was evaluated by dismantling the flow paths made under identical condition, and observing the cross section of the weld. Observation of the cross section of the weld was performed at three points in total, including a middle point between the both ends of the partial flow path, and two middle points between said middle point and the end portion of the partial flow path. In a case in which an entire surface of the laser weld between the press forming member and the flow path upper lid was covered with Al-based plating, it was evaluated as lank "A", in a case in which a part of the surface of the laser weld was covered with the Al-based plating, it was evaluated as lank "B", and in a case in which none of the surface of the laser weld was covered, it was evaluated as "C". Samples evaluated as lank A or lank B were determined that the state of inner plating was good.

Regarding inner surface corrosion resistance, in a case in which the filter was clogged and continuation of the circulation became impossible, it was evaluated as lank "C". The flow path through which LLC was capable of circulating by 100 hours was dismantled, and the state of inner corrosion was visually confirmed. In a case in which LLC was capable of circulating by 100 hours, but red rust occurred on the inner surface of the flow path, it was evaluated as lank "B", and in a case in which rust did not occur, it was evaluated as lank "A". Samples evaluated as lank A or lank B were determined that the inner surface corrosion resistance was good.

**[Table 2]**

| No. | Welding method | Interval between partial flow paths | Distance between steel sheets | Thickness of plating | Heat input |
|---|---|---|---|---|---|
| 1 | Spot welding | 5 mm | 0.00 mm | 10 µm | - |
| 2 | Laser welding | 5 mm | 0.00 mm | 60 µm | 120 kJ/m |
| 3 | Laser welding | 5 mm | 0.00 mm | 60 µm | 60 kJ/m |
| 4 | Laser welding | 5 mm | 0.00 mm | 60 µm | 45 kJ/m |
| 5 | Laser welding | 5 mm | 0.00 mm | 60 µm | 30 kJ/m |
| 6 | Laser welding | 5 mm | 0.05 mm | 60 µm | 45 kJ/m |
| 7 | Laser welding | 5 mm | 0.10 mm | 60 µm | 45 kJ/m |
| 8 | Laser welding | 5 mm | 0.15 mm | 60 µm | 45 kJ/m |
| 9 | Laser welding | 5 mm | 0.20 mm | 60 µm | 45 kJ/m |
| 10 | Laser welding | 5 mm | 0.30 mm | 60 µm | 45 kJ/m |
| 11 | Laser welding | 5 mm | 0.00 mm | 10 µm | 120 kJ/m |
| 12 | Laser welding | 5 mm | 0.00 mm | 10 µm | 60 kJ/m |
| 13 | Laser welding | 5 mm | 0.00 mm | 10 µm | 45 kJ/m |
| 14 | Laser welding | 5 mm | 0.00 mm | 10 µm | 30 kJ/m |
| 15 | Laser welding | 5 mm | 0.05 mm | 10 µm | 45 kJ/m |
| 16 | Laser welding | 5 mm | 0.10 mm | 10 µm | 45 kJ/m |
| 17 | Laser welding | 5 mm | 0.10 mm | 10 µm | 30 kJ/m |
| 18 | Laser welding | 5 mm | 0.15 mm | 10 µm | 45 kJ/m |
| 19 | Laser welding | 5 mm | 0.20 mm | 10 µm | 45 kJ/m |
| 20 | Laser welding | 5 mm | 0.30 mm | 10 µm | 45 kJ/m |
| 21 | Laser welding | 5 mm | 0.00 mm | 60 µm | 45 kJ/m |

**[Table 3]**

| No. | State of inner plating | Bead width | Inner surface corrosion resistance |
|---|---|---|---|
| 1 | - | - | - |
| 2 | A | 1.77 mm | A |
| 3 | A | 1.44 mm | A |
| 4 | A | 1.28 mm | A |
| 5 | A | 1.17 mm | A |
| 6 | A | 1.29 mm | A |
| 7 | A | 1.51 mm | A |
| 8 | A | 1.57 mm | A |
| 9 | B | 1.70 mm | B |
| 10 | B | 1.76 mm | B |
| 11 | A | 1.74 mm | A |
| 12 | A | 1.45 mm | A |
| 13 | A | 1.31 mm | A |
| 14 | A | 1.28 mm | A |
| 15 | A | 1.37 mm | A |
| 16 | A | 1.48 mm | A |
| 17 | A | 1.40 mm | A |
| 18 | B | 1.55 mm | B |
| 19 | B | 1.68 mm | B |
| 20 | C | 1.78 mm | B |
| 21 | A | 1.11 mm | A |

In the example No. 1, spot welding could not be performed. The reason was that the electrode having ϕ16mm could not contact with a welding-planned portion when the flow path interval was 5 mm.

On the other hand, in all examples manufactured using laser welding, even if the flow path interval was small, joining could be performed. In addition, in all examples, red rust was not confirmed in LLC after the above-described LLC circulation test. Therefore, all examples had excellent inner surface corrosion resistance. Moreover, in all examples, LCC leakage was not confirmed. Therefore, all examples had excellent liquid tightness. Furthermore, since the flow path intervals are narrowed in all the examples, high cooling efficiency can be exhibited when these are used for cooling of a battery cell or the like. Although outer surface corrosion resistance was not evaluated, it is expected that outer surface corrosion resistance was high similar to the inner surface corrosion resistance.

### [Brief Description of the Reference Symbols]

1 Cooling structure
11 Press forming member
111 Groove part
112 Bank part
12 Flow path upper lid
13 Laser weld
13A Flow path outer edge weld
131 Start position
132 End position
133 Middle portion
14 Flow path
141 Parallel flow path portion
1411 Partial flow path
142 Flow path connecting portion
143 Cooling liquid inlet
144 Cooling liquid outlet
15 Base steel sheet
16 Al-based plating
2 Battery unit
21 Battery cell
22 Battery pack
23 Gap filler
R Circle indicating radius of curvature of bank part
T Tab plate
L Laser
D Interval between flow paths
W Width of flow path

## Claims

1. A cooling structure comprising:
a press forming member having a groove part and a bank part provided around the groove part;
a flow path upper lid which is a flat sheet overlapped at a position covering the groove part of the press forming member and forms a flat cooling surface; and
a laser weld which joins opposing surfaces of the flow path upper lid and the bank part to form a flow path through which a cooling liquid is capable of flowing, wherein
the press forming member and the flow path upper lid are plated steel sheets each including a base steel sheet and a Al-based plating,
the flow path includes a parallel flow path portion in which a plurality of partial flow paths extending along a first direction are arranged in a second direction orthogonal to the first direction, and
in a part or all of the parallel flow path portions, an interval between the adjacent partial flow paths is 20 mm or less.

2. The cooling structure according to claim 1, wherein in the parallel flow path portion, an interval between the adjacent partial flow paths is 0.8 to 15 mm.

3. The cooling structure according to claim 1 or 2, wherein a width of the partial flow path is 6 to 60 mm.

4. The cooling structure according to claim 1 or 2, wherein a width of the partial flow path is 6 to 20 mm.

5. The cooling structure according to any one of claims 1 to 4, wherein the Al-based plating includes Si.

6. The cooling structure according to claim 5, wherein the Si content of the Al-based plating is 2.0 to 15 mass%.

7. The cooling structure according to any one of claims 1 to 6, wherein the cooling structure includes a chemical conversion coating film including 50 mass% or more of a Zr-based component, a Ti-based component or a Si-based component.

8. The cooling structure according to any one of claims 1 to 7, wherein
a cross-sectional shape of the bank part is substantially an arc, and
a radius of curvature of the bank part at a contact section between the flow path upper lid and the bank part is 15 mm or less.

9. The cooling structure according to any one of claims 1 to 8, wherein
a film thickness of the Al-based plating is 10.0 µm or more,
in a vicinity of the laser weld, an interval between the press forming member and the flow path upper lid is 0.3 mm or less, and
a wider one of a bead width of a surface of the laser weld in the flow path upper lid and a bead width of a surface of the laser weld in the press forming member is 0.8 to 1.5 mm.

10. The cooling structure according to any one of claims 1 to 9, wherein the plated steel sheet forming the press forming member and the flow path upper lid has a sheet thickness of 0.3 to 1.2 mm.

11. The cooling structure according to any one of claims 1 to 10, wherein
the laser weld includes a flow path outer edge weld surrounding all the flow paths, and
a starting end and a terminating end of the laser weld are excluded from the flow path outer edge weld.

12. The cooling structure according to any one of claims 1 to 11, wherein a start position and an end position of the laser weld are omitted from the cooling structure.

13. The cooling structure according to any one of claims 1 to 12, wherein a part or a whole of a surface of the laser weld between the press forming member and the flow path upper lid is covered with the Al-based plating.

14. The cooling structure according to any one of claims 1 to 13, wherein 30% or more of a surface of the laser weld between the press forming member and the flow path upper lid is covered with the Al-based plating.

15. The cooling structure according to any one of claims 1 to 14, wherein a bead height of the laser weld in the flow path upper lid is 0.3 mm or less.

16. A battery unit comprising:
a battery cell;
a battery pack in which the battery cell is housed; and
the cooling structure according to any one of claims 1 to 15, wherein
the flow path upper lid of the cooling structure is joined to the battery pack.

17. A battery unit comprising:
a battery cell;
a battery pack in which the battery cell is housed; and
the cooling structure according to any one of claims 1 to 15, wherein
the flow path upper lid of the cooling structure is the battery pack.

18. A manufacturing method of a cooling structure comprising:
press-forming a steel sheet to obtain a press forming member having a groove part and a bank part provided around the groove part; and
overlapping a flow path upper lid which is a flat sheet at a position covering the groove part of the press forming member and laser welding the flow path upper lid and the bank part of the press forming member to obtain a laser weld which forms a flow path through which a cooling liquid is capable of flowing, wherein
the press forming member and the flow path upper lid are plated steel sheets each including a base steel sheet and a Al-based plating,
the flow path includes a parallel flow path portion in which a plurality of partial flow paths extending along a first direction are arranged in a second direction orthogonal to the first direction, and
in the parallel flow path portions, an interval between the adjacent partial flow paths is 20 mm or less.

19. The manufacturing method of a cooling structure according to claim 18, wherein
a film thickness of the Al-based plating is 10.0 µm or more,
in the laser welding, a beam diameter is 0.2 to 0.8 mm and a heat input per unit welding length is 30 to 120 kJ/m, and
an interval between the press forming member and the flow path upper lid in the vicinity of the laser weld is 0.3 mm or less.
